# EUROPÄISCHE PATENTSCHRIFT

(11) **EP 2 221 585 B1**
(45) Veröffentlichungstag und Bekanntmachung des Hinweises auf die Patenterteilung: **19.03.2014**
(21) Anmeldenummer: 09002512.3
(22) Anmeldetag: 23.02.2009
(51) Int. Cl.: G01D 4/00

(54) **Verfahren zur Sammlung von Verbrauchsdaten**
Method for gathering consumption information
Procédé de collecte de données de consommation

(43) Veröffentlichungstag der Anmeldung: 25.08.2010
(73) Patentinhaber: Lorenz GmbH & Co. KG, 89601 Schelklingen-Ingstetten (DE)
(72) Erfinder: Dannecker, Andreas, 89601 Schelklingen-Sondernach (DE)
(74) Vertreter: Meyer, Thorsten

(56) Entgegenhaltungen:
- DE-A1-102004 050 658
- US-A1- 2008 186 201

## Beschreibung

Die Erfindung betrifft ein Verfahren zur Sammlung von Verbrauchsdaten gemäß dem Oberbegriff des Anspruchs 1.

Zur Ermittlung eines Verbrauchs, wie beispielsweise eines Energie- und/oder Fluid- bzw. Volumenverbrauchs, sind Verbrauchszähler allgemein bekannt. Bekannte Beispiele für Verbrauchszähler zur Energieverbrauchsermittlung sind Wärmeverbrauchszähler, Stromverbrauchszähler, Ölverbrauchszähler und Gasverbrauchszähler, Beispiele für Verbrauchszähler zur. Fluid- bzw. Volumenverbrauchsermittlung sind Wasserverbrauchszähler, Ölverbrauchszähler und Gasverbrauchszähler. Auch Füllstandsanzeigen von Tanks stellen eine einfache Art von Verbrauchszählern dar.

Allgemein bekannte, beispielsweise in Gebäuden angeordnete Verbrauchszähler weisen zur Erfassung des Verbrauchs eine Zählerstandsanzeige auf, die zu bestimmten Erfassungszeitpunkten, beispielsweise in regelmäßigen Zeitabständen, abgelesen wird. Üblicherweise entspricht die Differenz zwischen zwei Ablesungen dem Verbrauch innerhalb des zurückliegenden Zeitintervalls zwischen den beiden Erfassungszeitpunkten, zu denen die Ablesungen erfolgten.

Die Ablesung erfolgt bislang meist durch Inaugenscheinnahme. Es sind jedoch auch Verbrauchszähler bekannt, welche Einrichtungen zur automatischen Ablesung des Verbrauchs umfassen, beispielsweise Vorsatzgeräte, die den Zählerstandsanzeigen bestehender, bislang durch Inaugenscheinnahme abgelesener Verbrauchszähler vorgesetzt sind und die Zählerstandsanzeige in anschließend beispielsweise fernübertragbare Verbrauchsdaten umwandeln.

Ein solches Vorsatzgerät ist beispielsweise durch die DE 200 04 969 Ul bekannt. Dort erfasst eine auf einem die Zählerstandsanzeige abdeckenden Sichtglas angeordnete Kamera ein Kamerabild des Zählerstands. Anschließend wird das Kamerabild in Verbrauchsdaten umgewandelt, indem der Zählerstand im Kamerabild mittels einer Bilderkennungssoftware abgelesen wird. Die nunmehr vorliegenden Verbrauchsdaten werden dann zur Verbrauchsabrechnung an einen Verbrauchsdatensammler übertragen.

Ferner sind Verbrauchszähler bekannt, die ohne solche Vorsatzgeräte auskommen. Bei ihnen werden beispielsweise fernübertragbare Verbrauchsdaten von einer integrierten Einrichtung direkt erfasst, ohne kompliziertes und fehleranfälliges Ablesen eines Zählerstandes. Beispiele solcher Einrichtungen sind durch die DE 102 10 365 A1 und durch die DE 28 32 688 C2 bekannt.

Um diesen unterschiedlichen Ausgestaltungen gerecht zu werden, ist im vorliegenden Dokument allgemein von einer Erfassung von Verbrauchsdaten die Rede, unabhängig davon, ob dies mittels einem eine Zählerstandsanzeige ablesenden Vorsatzgerät erfolgt, oder mittels einer in den Verbrauchszähler integrierten, die Verbrauchsdaten direkt erfassenden Einrichtung.

Auch wird im vorliegenden Dokument nicht unterschieden, ob es sich bei den Verbrauchsdaten direkt um einem Verbrauch zwischen zwei Erfassungszeitpunkten entsprechende Daten, oder um einem zum jeweiligen Erfassungszeitpunkt vorliegenden Zählerstand entsprechende Daten handelt, aus denen ein Verbrauch zwischen zwei Erfassungszeitpunkten durch Subtraktion ermittelt werden muss.

Bei der Fernübertragung der Verbrauchsdaten vom Verbrauchszähler zu einem beispielsweise Verbrauchsdaten mehrerer Verbrauchszähler sammelnden, kurz auch als Datensammler bezeichneten Verbrauchsdatensammler besteht das allgemein bekannte Problem, dass es weder wirtschaftlich vertretbar ist, noch in den meisten Fällen erwünscht ist, zu den Aufstellungsorten der Verbrauchszähler Kabel zur Fernübertragung der Verbrauchsdaten zum Datensammler oder Leitungen zur Stromversorgung der den Verbrauchszählern zugeordneten Einrichtung zur Fernübertragung der Verbrauchsdaten zu verlegen.

Durch die EP 0 701 109 A2 ist bekannt, eine Einrichtung zur drahtlosen Fernübertragung der Verbrauchsdaten in einen Verbrauchszähler zu integrieren. Die Einrichtung umfasst ein Funkmodul. Als Energiequelle zur Energieversorgung des Funkmoduls dient eine Batterie oder ein Akkumulator.

Nachteilig bei bidirektionalen Funkschnittstellen ist der hohe Energieverbrauch aufgrund des ständigen Betriebs des Funkmoduls und damit die eingeschränkte Bereitschaftsdauer eines solchen Verbrauchszählers, bedingt durch die begrenzte Energiespeicherkapazität der Energiequelle.

Durch die DE 197 06 613 A1 ist bekannt, zur Senkung des Energieverbrauchs die Einrichtung zur drahtlosen Fernübertragung der Verbrauchsdaten nur nach Aufforderung in Betrieb zu nehmen. Die Aufforderung erfolgt dabei durch eine Funkanfrage durch einen Datensammler.

Nachteilig hieran ist, dass Einrichtung zur drahtlosen Fernübertragung eine in ständiger Empfangsbereitschaft stehende Empfangseinrichtung benötigt, wodurch die Bereitschaftsdauer ebenfalls unerwünscht stark einschränkt wird.

Durch die DE 100 39 430 A1 ist beispielsweise bekannt, Bluetooth-Module als Einrichtungen zur drahtlosen Fernübertragung der Verbrauchsdaten von Verbrauchszählern zu verwenden. Findet keine Übertragung von Verbrauchsdaten statt, fallen die Bluetooth-Module in einen Ruhezustand mit verringertem Energieverbrauch. Sie werden zu einem gewünschten Zeitpunkt, zu dem eine Ablesung erfolgen soll, wieder aufgeweckt.

Nachteilig hieran sind der hohe Energieverbrauch von Bluetooth-Modulen und deren eingeschränkte Reichweite, insbesondere in Gebäuden.

Durch die DE 10 2004 055 659 A1 ist bekannt, Radio-Frequency-Identification (RFID) Technologie für die Einrichtung zur drahtlosen Fernübertragung der Verbrauchsdaten eines Verbrauchszählers einzusetzen.

Nachteilig hieran ist die stark eingeschränkte Reichweite von RFID.

Um dem Problem der eingeschränkten Bereitschaftsdauer Herr zu werden, ist ferner bekannt, die Einrichtungen zur drahtlosen Fernübertragung der Verbrauchsdaten eines Verbrauchszählers zwischen den Fernübertragungen zu deaktivieren. Der Verbrauchszähler weist hierzu eine eigene Zeitmesseinrichtung auf, welche die Zeiträume zwischen aufeinander folgenden Fernübertragungen überwacht und die Einrichtungen zur drahtlosen Fernübertragung der Verbrauchsdaten rechtzeitig vor Beginn der nächsten Fernübertragung aktiviert.

Durch die DE 10 2004 050 658 A1 ist bekannt, eine Zeitmesseinrichtung in einen Verbrauchszähler zu integrieren, mittels der eine Einrichtung zur drahtlosen Fernübertragung der Verbrauchsdaten des Verbrauchszählers zu voreingestellten Zeitpunkten aus einem Schlafmodus geweckt wird, während welchem Schlafmodus die Einrichtung zur drahtlosen Fernübertragung der Verbrauchsdaten keine elektrische Energie verbraucht. Die drahtlose Fernübertragung der Verbrauchsdaten kann dabei neben der üblichen Funktechnologie auch über Metallrohre von Gas-, Wasser- oder Heizungsrohren erfolgen.

Nachteilig hieran ist, dass Ablesezeitfenster, während denen der Datensammler eine Ablesung durchführen möchte, und die Übertragungszeitfenster, während denen die Zeitmesseinrichtung des Verbrauchszählers dessen Einrichtung zur drahtlosen Fernübertragung der Verbrauchsdaten aktiviert, durch Abweichungen der Zeitmesseinrichtung des Verbrauchszählers gegenüber einer beispielsweise durch den Datensammler vorgegebenen, auch als Absolut- oder Generalzeit bezeichenbaren Zeit auf Dauer in einem sich beispielsweise am Datensammler orientierenden Zeitablauf immer weiter auseinanderdriften. Deshalb müssen die Zeitfenster beim Stand der Technik entsprechend groß gewählt werden, um zumindest während eines.wirtschaftlich einigermaßen vertretbar großen Zeitraums zumindest zu überlappen und so ein Erfassen der Verbrauchsdaten zu ermöglichen, was automatisch mit einem entsprechend unerwünscht höheren Energieverbrauch einhergeht und damit mit einer ebenfalls unerwünscht beschränkten Bereitschaftsdauer des Verbrauchszählers verbunden ist. Darüber hinaus wird die Verfügbarkeit der Fernübertragung von Verbrauchsdaten durch das Auseinanderdriften der Ablese- und Übertragungszeitfenster eingeschränkt.

Durch US 2008/0186201 A1 ist ein intelligentes System zur Sammlung von Ablesungen von Stromzählern unter stabiler bidirektionaler Kommunikation zwischen einer Zentrale und den Stromzählern bekannt. Das intelligente System besteht aus mehreren Stromzählern, einem mit den Stromzählern verbundenen Datensammler und eine drahtlos mit dem Datensammler verbundene Zentrale. Die Stromzähler übertragen die von ihnen erfassten Verbrauchsdaten über die Stromleitungen zum Datensammler. Die Stromzähler und der Datensammler sind hierzu mit dem Stromnetz verbunden.

Der Erfindung liegt daher die Aufgabe zugrunde, ein Verfahren zur drahtlosen Erfassung von Verbrauchsdaten zu entwickeln, welches einen geringeren Energieverbrauch der Einrichtung zur drahtlosen Fernübertragung der Verbrauchsdaten eines Verbrauchszählers, sowie eine längere Verfügbarkeit der Fernübertragung von Verbrauchsdaten und damit eine längere Bereitschaftsdauer des Verbrauchszählers ermöglicht.

Die Aufgabe wird gelöst durch die Merkmale des Anspruchs 1.

Bei einem Verfahren zur Sammlung von Verbrauchsdaten mindestens eines Verbrauchszählers durch einen Datensammler ist demnach vorgesehen, durch den mindestens einen Verbrauchszähler erfasste Verbrauchsdaten während Fernübertragungen in Zeitfenstern, deren Lagen in einer datensammlerseitigen Zeit festgelegt sind, zu deren Sammlung drahtlos an den Datensammler zu übermitteln. Bei dem Verfahren ist ferner vorgesehen, dass der Verbrauchszähler selbständig die Lagen der Zeitfenster in einer verbrauchszählerseitigen Zeit überwacht. Außerdem sieht das Verfahren vor, dass die verbrauchszählerseitig zumindest für die Fernübertragung der Verbrauchsdaten vorgesehenen und von einem Energiespeicher mit Strom versorgten Einrichtungen zwischen den Fernübertragungen in einen anhand der verbrauchszählerseitigen Zeit zur nächsten Fernübertragung wieder beendeten, stromlosen oder zumindest stromsparenden Ruhezustand versetzt werden. Erfindungsgemäß ist darüber hinaus vorgesehen, dass bei bzw. während jeder Fernübertragung die datensammlerseitigen und verbrauchszählerseitigen Zeiten synchronisiert werden.

Sich durch die Erfindung ergebende Vorteile gegenüber dem Stand der Technik sind ein verringerter Energieverbrauch der Einrichtungen zur drahtlosen Fernübertragung der Verbrauchsdaten des Verbrauchszählers und eine sich dadurch ergebende längere Bereitschaftsdauer des Verbrauchszählers bei gleich dimensionierter Energiequelle. Durch die Synchronisation der datensammlerseitigen und verbrauchszählerseitigen Zeiten werden bei jeder Fernübertragung der Verbrauchsdaten Koppelfehler bei der Bestimmung des Beginns des Zeifensters für die nächste Fernübertragung eliminiert, die sich ansonsten durch das Aufaddieren der Abweichungen der datensammlerseitigen und verbrauchszählerseitigen Zeiten im Laufe der Zeit ergeben würden. Dadurch wird verhindert, dass die in den datensammlerseitigen und verbrauchszählerseitigen Zeiten unabhängig voneinander überwachten Lagen der Zeitfenster immer weiter voneinander weg driften würden, wodurch lange Zeitfenster benötigt werden würden, um überhaupt über einen längeren Zeitraum von beispielsweise mehreren Jahren hinweg eine zuverlässige Fernübertragung zu ermöglichen. Der verringerte Energieverbrauch der Erfindung ergibt sich insbesondere dadurch, dass durch die regelmäßige Synchronisation der datensammlerseitigen und verbrauchszählerseitigen Zeiten bei gleicher Sicherheit eines Überlappens der datensammlerseitigen und verbrauchszählerseitigen Zeitfenster diese kürzer als beim Stand der Technik gewählt werden können, da die sich beim Stand der Technik einschleichenden Koppelfehler eliminiert werden. Durch die regelmäßige Synchronisation der datensammlerseitigen und verbrauchszählerseitigen Zeiten bei jeder Fernübertragung wird so außerdem eine längere Verfügbarkeit der Fernübertragung von Verbrauchsdaten als beim Stand der Technik ermöglicht.

Je Verbrauchszähler kann eine Fernübertragung beispielsweise mindestens einmal pro Tag erfolgen.

Bei dem Datensammler kann es sich um einen stationären Datensammler handeln, ebenso ist denkbar, dass es sich um einen mobilen Datensammler handelt.

Die für eine Fernübertragung der Verbrauchsdaten vorgesehenen Einrichtungen umfassen dabei vorzugsweise auch bzw. gleichzeitig die für eine Synchronisation der datensammlerseitigen und verbrauchszählerseitigen Zeiten vorgesehenen Einrichtungen, so dass verbrauchszählerseitig gemeinsam mit den für eine Fernübertragung der Verbrauchsdaten vorgesehenen Einrichtungen die für die Synchronisation der datensammlerseitigen und verbrauchszählerseitigen Zeiten vorgesehenen Einrichtungen zwischen den Fernübertragungen in einen anhand der verbrauchszählerseitigen Zeit zur nächsten Fernübertragung wieder beendeten stromlosen oder zumindest stromsparenden Ruhezustand versetzt werden.

Eine vorteilhafte Ausgestaltung der Erfindung sieht vor, dass der Datensammler dem Verbrauchszähler eine erfolgreiche Übermittlung der Verbrauchsdaten am Ende einer Fernübertragung bestätigt.

Die für eine Fernübertragung der Verbrauchsdaten vorgesehenen Einrichtungen umfassen dabei vorzugsweise auch bzw. gleichzeitig die für eine Bestätigung der Fernübertragung vorgesehenen Einrichtungen, so dass verbrauchszählerseitig gemeinsam mit den für eine Fernübertragung der Verbrauchsdaten vorgesehenen Einrichtungen die für die Bestätigung der Fernübertragung vorgesehenen Einrichtungen zwischen den Fernübertragungen in einen anhand der verbrauchszählerseitigen Zeit zur nächsten Fernübertragung wieder beendeten stromlosen oder zumindest stromsparenden Ruhezustand versetzt werden.

Eine andere vorteilhafte Ausgestaltung der Erfindung sieht vor, dass die für eine Fernübertragung der Verbrauchsdaten vorgesehenen Einrichtungen unmittelbar nach einer Bestätigung einer erfolgreichen Übermittlung der Verbrauchsdaten an den Datensammler in den Ruhezustand fallen. Dadurch wird eine weitere, mit einer höheren Bereitschaftsdauer einhergehende Energieeinsparung erreicht, da unnötige Betriebsdauern der für die Fernübertragung der Verbrauchsdaten vorgesehenen Einrichtungen vermieden werden.

Eine zusätzliche, vorteilhafte Ausgestaltung der Erfindung sieht vor, dass der Datensammler den Verbrauchszähler zu Beginn einer Fernübertragung anspricht und der Verbrauchszähler erst nach erfolgter Ansprache die Verbrauchsdaten während der Fernübertragung an den Datensammler übermittelt.

Die für eine Fernübertragung der Verbrauchsdaten vorgesehenen Einrichtungen umfassen dabei vorzugsweise auch bzw. gleichzeitig die für ein Ansprechen des Verbrauchszählers durch den Datensammler bei Beginn der Fernübertragung vorgesehenen Einrichtungen, so dass verbrauchszählerseitig gemeinsam mit den für eine Fernübertragung der Verbrauchsdaten vorgesehenen Einrichtungen die für das Ansprechen des Verbrauchszählers durch den Datensammler bei Beginn der Fernübertragung vorgesehenen Einrichtungen zwischen den Fernübertragungen in einen anhand der verbrauchszählerseitigen Zeit zur nächsten Fernübertragung wieder beendeten stromlosen oder zumindest stromsparenden Ruhezustand versetzt werden.

Eine besonders vorteilhafte Ausgestaltung der Erfindung sieht vor, dass mehrere Verbrauchszähler zu einer Gruppe zusammengefasst sind, wobei den Verbrauchszählern einer Gruppe ein gemeinsames Zeitfenster zugeordnet ist.

Die Gruppengröße ist dabei vorzugsweise nach den erforderlichen Einschaltdauern der für eine Fernübertragung der Verbrauchsdaten vorgesehenen Einrichtungen der Verbrauchszähler in der Gruppe optimiert. Dadurch kann die Größe der den einzelnen Gruppen zugeordneten Zeitfenster optimiert werden, indem z.B. die Zeitfenster gleich lang sind. Dabei können sowohl die zu erwartenden und/oder z.B. nach einer bestimmten Anzahl von Fernübertragungen die Datenübertragungslänge bzw.
- dauern berücksichtigt werden. Ebenfalls ist denkbar, die Drift der Zeiten der Verbrauchszähler zu bestimmen und/oder zu überwachen und diese zusätzlich oder alternativ bei der Optimierung der Gruppengröße und Gruppenzugehörigkeit zu berücksichtigen.

Eine vorteilhafte Ausgestaltung der Erfindung sieht ein Rollieren bzw. zyklisches Vertauschen der Reihenfolge der Fernübertragungen der einzelnen Verbrauchszähler innerhalb einer Gruppe vor.

Dadurch wird gewährleistet, dass jeder Verbrauchszähler bzw. die für eine Fernübertragung der Verbrauchsdaten vorgesehenen Einrichtungen jedes Verbrauchszählers einer Gruppe über die Bereitschaftsdauer bzw. Lebensdauer gesehen innerhalb eines Zeitfensters die gleiche Energiemenge für die Übermittlung der Verbrauchsdaten bzw. für die Kommunikation aufwendet. Dadurch wird die Verfügbarkeit der Fernübertragung von Verbrauchsdaten der Gruppe über die gesamte Bereitschaftsdauer verbessert.

Die für eine Fernübertragung der Verbrauchsdaten vorgesehenen Einrichtungen umfassen dabei vorzugsweise auch bzw. gleichzeitig die für ein Rollieren bzw. zyklisches Vertauschen der Reihenfolge der Fernübertragungen der einzelnen Verbrauchszähler innerhalb einer Gruppe vorgesehenen Einrichtungen, so dass verbrauchszählerseitig gemeinsam mit den für eine Fernübertragung der Verbrauchsdaten vorgesehenen Einrichtungen die für das Rollieren bzw. zyklische Vertauschen der Reihenfolge der Fernübertragungen der einzelnen Verbrauchszähler innerhalb einer Gruppe vorgesehenen Einrichtungen zwischen den Fernübertragungen in einen anhand der verbrauchszählerseitigen Zeit zur nächsten Fernübertragung wieder beendeten stromlosen oder zumindest stromsparenden Ruhezustand versetzt werden.

Eine andere, besonders vorteilhafte Ausgestaltung der Erfindung sieht vor, dass innerhalb eines Zeitfensters einer Gruppe Pufferzeiten zwischen den Übermittlungen der Verbrauchsdaten während der Fernübertragungen der zu der Gruppe gehörenden Verbrauchszähler vorgesehen sind.

Eine zusätzliche, besonders vorteilhafte Ausgestaltung der Erfindung sieht vor, dass die Verbrauchsdaten mehrerer Gruppen von Verbrauchszählern durch den Datensammler gesammelt werden, wobei den Gruppen aufeinander folgende Zeitfenster zugeordnet sind.

Zwischen unterschiedlichen Gruppen von Verbrauchszählern zugeordneten Zeitfenstern können dabei zumindest datensammlerseitig Pufferzeiten vorgesehen sein.

Vorzugsweise erfolgt verbrauchszählerseitig eine Zwischenspeicherung von zwischen zwei Fernübertragungen gemessener Verbrauchsdaten, wobei insbesondere eine Aufsummierung der aufgelaufenen Monatswerte erfolgt.

Besonders bevorzugt ist ein dem Zeitfenster nachgeordnetes Auffangzeitfenster vorgesehen, während dem ein Verbrauchszähler, dessen Fernübertragung zum Datensammler z.B. mangels Verbindungsaufbau während des Zeitfensters gescheitert ist, eine weitere Fernübertragung versucht, indem z.B. sein Ruhezustand nochmals beendet wird, wodurch er sich ein weiteres Mal kommunikationsaktiv schaltet und noch einmal angesprochen wird.

Kommt während des Auffangzeitfensters eine Fernübertragung zu Stande, bleibt der Verbrauchszähler beispielsweise seiner Gruppe zugeordnet. Kommt jedoch auch während des Auffangzeitfensters über eine definierte Anzahl von Zeitfenstern, d.h. Sammelzyklen, während denen Verbrauchsdaten der Verbrauchszähler von dem Datensammler gesammelt werden, keine Fernübertragung bzw. Kommunikation zustande, wird der Verbrauchszähler vorzugsweise z.B. aus seiner Gruppe verbannt und vom Datensammler nicht mehr angesprochen.

Eine gescheiterte Fernübertragung bzw. ein Kommunikationsausfall kann gemäß einer vorteilhaften Ausgestaltung der Erfindung im Datensammler vorzugsweise elektronisch hinterlegt werden.

Beispielsweise kann ein gescheiterter Kommunikationsversuch vom Datensammler abgespeichert und nicht wiederholt werden.

Ferner ist denkbar, dass ein Nutzer z.B. mit einem PC vorzugsweise drahtlos auf den Datensammler zugreifen kann, um seine Verbrauchsdaten auszulesen bzw. abzurufen.

Dabei kann beispielsweise von einer Abrechnungsgesellschaft anhand der vom Datensammler gesammelten Verbrauchsdaten mindestens eines einem Nutzer zugeordneten Verbrauchszählers ein Verbrauchsprofil des Nutzers erstellt werden.

Dabei ist denkbar, dass z.B. in einer größeren Wohneinheit die Verbrauchszähler jedes Nutzers in einer oder mehreren Gruppen zusammengefasst sind, so dass z.B. gruppenweise Verbrauchsprofile erstellt werden können.

Bei einer gescheiterten Synchronisation der datensammlerseitigen und verbrauchszählerseitigen Zeiten, beispielsweise bei einer gescheiterten Fernübertragung bzw. nach einem gescheiterten Kommunikationsversuch, kalibriert der Verbrauchszähler seine Zeit vorzugsweise selbständig z.B. auf Basis ermittelter Werte.

Weitere vorteilhafte Ausgestaltungen ergeben sich aus den weiteren Unteransprüchen oder deren mögliche Unterkombinationen.

Nachfolgend wird die Erfindung anhand der Zeichnungen weiter erläutert. Im Einzelnen zeigt die schematische Darstellung in:
- Fig. 1: eine schematische Darstellung eines einer Gruppe von Verbrauchszählern zugeordneten Zeitfensters,
- Fig. 2: eine schematische Darstellung zeitlich aufeinander folgender, einer Gruppe von Verbrauchszählern zugeordneter Zeitfenster, und
- Fig. 3: eine schematische Darstellung zeitlich aufeinander folgender, mehreren Gruppen von Verbrauchszählern zugeordneter Zeitfenster.

Die in den Figuren gleichen Bezugsziffern bezeichnen gleiche oder gleich wirkende Elemente.

Bei einem herkömmlichen, unidirektionalen Verfahren zur Sammlung von Verbrauchsdaten mindestens eines Verbrauchszählers durch einen Datensammler, ist vorgesehen, durch den mindestens einen Verbrauchszähler erfasste Verbrauchsdaten während Fernübertragungen in Zeitfenstern, deren Lagen in einer datensammlerseitigen Zeit festgelegt sind, zu deren Sammlung drahtlos an den Datensammler zu übermitteln. Jeder Verbrauchszähler überwacht dabei selbständig die Lagen der Zeitfenster in einer verbrauchszählerseitigen Zeit. Typischerweise werden die verbrauchszählerseitig zumindest für die Fernübertragung der Verbrauchsdaten vorgesehenen Einrichtungen zwischen den Fernübertragungen in einen anhand der verbrauchszählerseitigen Zeit zur nächsten Fernübertragung wieder beendeten, stromlosen oder zumindest stromsparenden Ruhezustand versetzt.

Bei einem solchen herkömmlichen, unidirektionalen Verfahren, bei denen jeder Verbrauchszähler selbständig die Lagen der Zeitfenster in einer verbrauchszählerseitigen Zeit überwacht, besteht in der Regel die Problematik, dass aufgrund von technisch bedingten Abweichungen der für die Zeitmessung üblicherweise verwendeten Oszillatoren die verbrauchszählerseitigen und datensammlerseitigen Zeiten stark voneinander abweichen. Diese Asynchronität führt häufig zu Übertragungskollisionen, welche dann Mehrfachübertragungen notwendig machen. Soll eine hohe Datensicherheit z.B. bei einer täglichen Übertragung erreicht werden, ist es bei einem solchen unidirektionalen Verfahren erforderlich, große Energiemengen in die Funkübermittlung der Verbrauchsdaten zu investieren.

Wird demgegenüber ein bidirektionales Verfahren zur Sammlung der Verbrauchsdaten verwendet, bei dem jeder Verbrauchszähler mit aktiver Empfangseinrichtung wartet, bis er von dem Datensammler angesprochen wird, so ergibt sich ebenfalls ein nicht praxisgerechter Energiebedarf bzw. eine nicht praxisgerechte notwendige Batteriekapazität.

Erst durch ein von einer Kombination des herkömmlichen, unidirektionalen Verfahrens und des bidirektionalen Verfahrens ausgehendes erfindungsgemäßes Verfahren, welches ein Kommunikations- und Synchronisationsmanagement vorsieht, bei dem bei bzw. während jeder Fernübertragung die datensammlerseitigen und verbrauchszählerseitigen Zeiten synchronisiert werden, wird eine praxisgerechte, wirtschaftliche Lösung erzielt.

Die für eine Fernübertragung der Verbrauchsdaten vorgesehenen Einrichtungen umfassen dabei vorzugsweise gleichzeitig die für eine Synchronisation der datensammlerseitigen und verbrauchszählerseitigen Zeiten vorgesehene Einrichtungen. Diese auch als Synchronisationseinrichtungen bezeichenbaren Einrichtungen weisen unter anderem vorzugsweise einen Empfänger auf, mit dem ein für die Synchronisation erforderliches Zeitsignal des Datensammlers DS empfangen werden kann. Dieser Empfänger, der zwischen den Zeitfenstern ZF1 ebenfalls in Ruhezustand versetzt wird, kann gleichzeitig dazu dienen, dass verbrauchszählerseitig während des Zeitfensters ZF1 auf ein datensammlerseitiges Aufforderungssignal zur Übermittlung der Verbrauchsdaten an den Datensammler DS gewartet wird. Die Fernübertragung gemäß dem erfindungsgemäßen Verfahren stellt demnach eine Hybridlösung aus herkömmlichem unidirektionalem und herkömmlichem bidirektionalem Verfahren dar, wobei sämtliche verbrauchszählerseitigen Einrichtungen zur Fernübertragung zwischen den Fernübertragungen in einen anhand der verbrauchszählerseitigen Zeit zur nächsten Fernübertragung wieder beendeten stromlosen oder zumindest stromsparenden Ruhezustand versetzt werden.

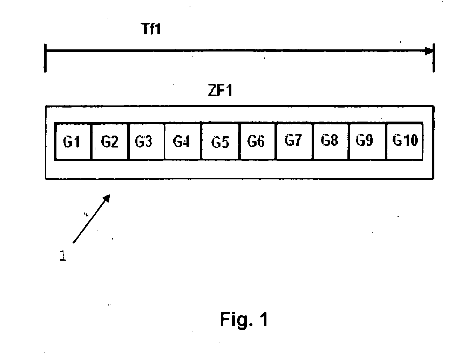

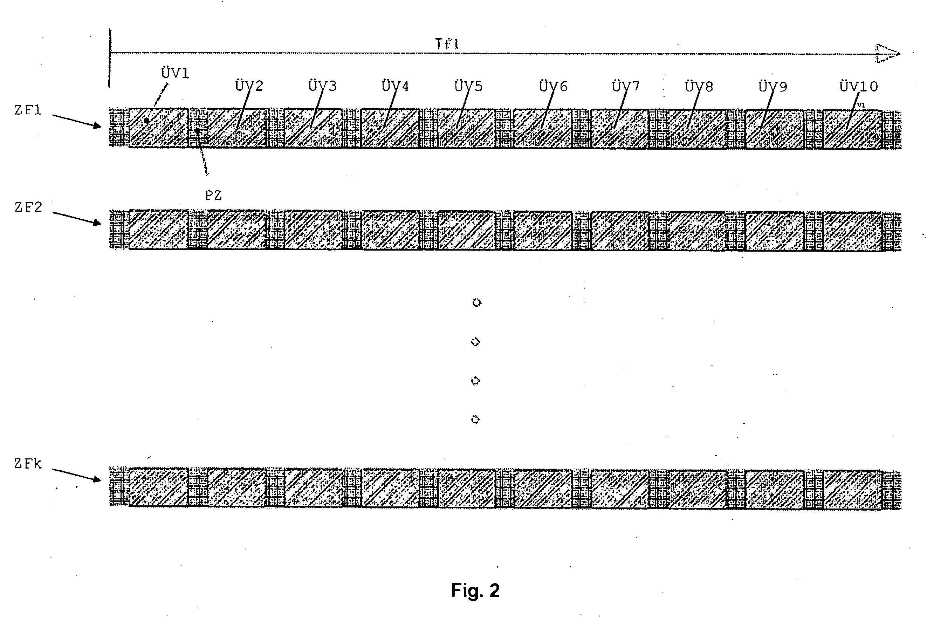

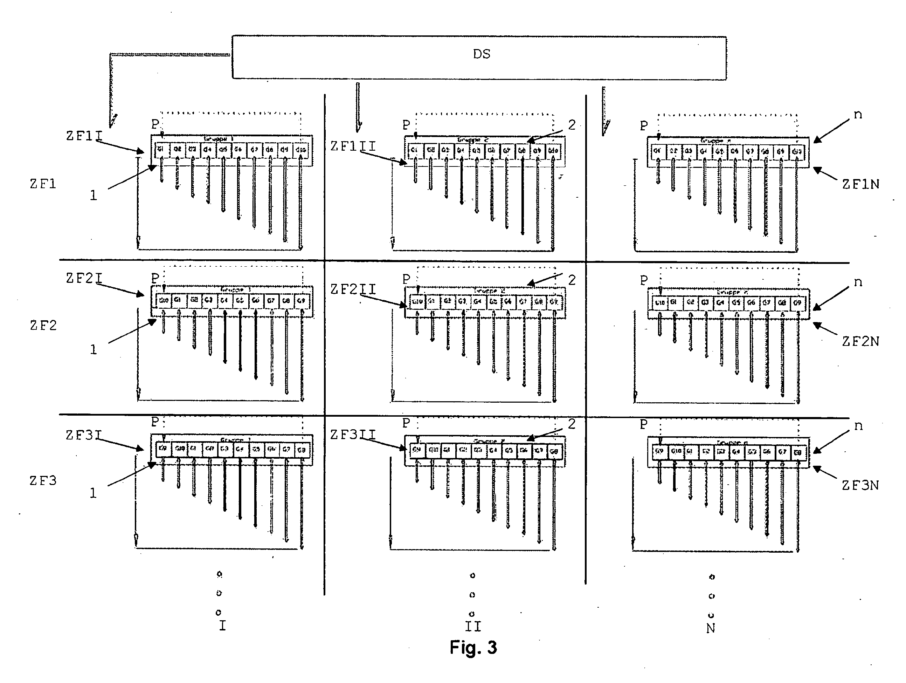

Vorzugsweise sind, wie in den Fig. 1 bis 3 dargestellt, erfindungsgemäß mehrere Verbrauchszähler G1, G2, G3, ... , G10 zu Gruppen 1, 2, ... , n zusammengefasst, wobei den Verbrauchszählern G1, G2, G3, ... , G10 einer Gruppe 1, 2, ... , n gemeinsame Zeitfenster ZF zugeordnet sind. Bei dem in Fig. 1 dargestellten Zeitfenster ZF1 handelt es sich dabei um ein einer Gruppe 1 von Verbrauchszählern G1, G2, G3, ... , G10 zugeordnetes Zeitfenster ZF. Bei den in Fig. 2 dargestellten Zeitfenstern ZF1, ZF2, ZFk handelt es sich dabei um zeitlich aufeinander folgende, einer Gruppe 1 von Verbrauchszählern G1, G2, G3, ... , G10 zugeordnete Zeitfenster ZF. Bei den in Fig. 3 dargestellten Zeitfenstern ZF1I, ZF1II, ZF1N, ZF2I, ZF2II, ZF2N, ZF3I, ZF3II, ZF3N handelt es sich dabei um zeitlich aufeinander folgende, Gruppen 1, 2, n von Verbrauchszählern G1, G2, G3, ... , G10 zugeordnete Zeitfenster ZF.

Jedes Zeitfenster ZF weist wie in den Fig. 1 und 2 dargestellt in einer datensammlerseitigen Zeit eine Aktivzeit Tf1 auf, während welcher Aktivzeit Tf1 jeder Verbrauchszähler G1, G2, G3, ... , G10 einer Gruppe 1, 2, ... , n eine Fernübertragung durchführt, zur Sammlung der Verbrauchsdaten durch den Datensammler DS. Jede Fernübertragung beginnt dabei mit einer verbrauchszählerseitigen Beendigung des Ruhezustandes der für eine Fernübertragung der Verbrauchsdaten vorgesehenen Einrichtungen. Dies erfolgt vorzugsweise bei allen Verbrauchszählern G1, G2, G3, ... , G10 einer Gruppe 1, 2, ... , n gemeinsam zu Beginn des gemeinsamen Zeitfensters ZF. Abweichungen zwischen den einzelnen Verbrauchszählern G1, G2, G3, ... , G10 ergeben sich durch ein unterschiedliches Auseinanderdriften der verbrauchszählerseitigen Zeiten seit der letzten Synchronisation während der letzten Fernübertragungen. Durch das Beenden des Ruhezustandes geht jeder Verbrauchszähler G1, G2, G3, ... , G10 einer Gruppe 1, 2, ... , n vorzugsweise auf Empfang und wartet, bis er innerhalb des seiner Gruppe zugeordneten Zeitfensters ZF vom Datensammler DS mittels eines Aufforderungssignals aufgefordert wird, seine Verbrauchsdaten zu übermitteln. Die Verbrauchszähler G1, G2, G3, ... , G10 innerhalb einer Gruppe 1, 2, ... , n werden dabei selektiv, in einer festgelegten Reihenfolge angesprochen. Die Aufforderung bzw. das Ansprechen kann beispielsweise durch ein individuelles Aufforderungssignal erfolgen. Das Aufforderungssignal kann dabei als ein für jeden Verbrauchszähler G1, G2, G3, ... , G10 individuell codiertes, für die Synchronisation der verbrauchszählerseitigen Zeit mit der datensammlerseitigen Zeit erforderliches Zeitsignal ausgebildet sein. Anschließend übermittelt der so angesprochene Verbrauchszähler G1, G2, G3, ... , G10 seine Verbrauchsdaten an den Datensammler DS. In Fig. 2 sind zur besseren Übersichtlichkeit der Darstellung die Übermittlungen ÜV1, ÜV2, ÜV3, ... , ÜV10 der Verbrauchsdaten während der Fernübertragungen der einzelnen Verbrauchszähler G1, G2, G3, ... , G10 innerhalb der Zeitfenster ZF1, ZF2, ZFk schematisch dargestellt. Vorzugsweise quittiert der Datensammler DS den Empfang der Verbrauchsdaten mit einem Bestätigungssignal. Dabei ist denkbar, dass die Synchronisation der verbrauchszählerseitigen und datensammlerseitigen Zeiten anstelle durch das Aufforderungssignal mittels des Bestätigungssignals erfolgt. Auch kann ein eigenes Synchronisationssignal vorgesehen sein, das unabhängig vom Aufforderungssignal und vom Bestätigungssignal ist. Ein so abgefragter Verbrauchszähler G1, G2, G3, ... , G10 versetzt seine für die Fernübertragung der Verbrauchsdaten vorgesehenen Einrichtungen vorzugsweise unmittelbar nach Erhalt des Bestätigungssignals in Ruhezustand und der Datensammler DS spricht den nächsten Verbrauchszähler G1, G2, G3, ... , G10 an.

Damit jeder Verbrauchszähler bzw. die für eine Fernübertragung der Verbrauchsdaten vorgesehenen Einrichtungen jedes Verbrauchszählers G1, G2, G3, ... , G10 einer Gruppe 1, 2, ... n über die Bereitschaftsdauer bzw. Lebensdauer gesehen innerhalb eines Zeitfensters ZF die gleiche Energiemenge für die Fernübertragung aufwendet bzw. die selbe Zeit lang aktiv ist, ist vorzugsweise wie in Fig. 3 schematisch angedeutet ein Rollieren bzw. zyklisches Vertauschen der Reihenfolge der Fernübertragungen der einzelnen Verbrauchszähler G1, G2, G3, ... , G10 innerhalb einer Gruppe 1, 2, ... , n vorgesehen. Hierzu sind in Fig. 3 drei jeweils einer Gruppe 1, 2, ... , n zugeordnete Spalten I, II, N dargestellt, in denen untereinander jeweils einer Gruppe 1, 2, ... , n zugeordnete, aufeinander folgenden Zeitfenster ZF1, ZF2, ZF3 dargestellt sind. Die Verbrauchsdaten mehrerer Gruppen 1, 2, ... , n von Verbrauchszählern G1, G2, G3, ... , G10 werden dabei in aufeinander folgenden Zeitfenstern ZF1I, ZF1II, ZF1N, ZF2I, ZF2II, ZF2N, ZF3I, ZF3II, ZF3N durch den Datensammler DS gesammelt. Die zyklisch vertauschten Reihenfolgen der Fernübertragungen der Verbrauchszähler G1, G2, G3, ... , G10 der Gruppen 1, 2, ... , n sind dabei wie durch die gepunkteten Pfeile P angedeutet durch von Zeitfenster ZF1I, ZF1II, ZF1N bzw. ZF2I, ZF2II, ZF2N zu Zeitfenster ZF2I, ZF2II, ZF2N bzw. ZF3I, ZF3II, ZF3N einer Gruppe 1, 2, ... , n zyklisch vertauschte Reihenfolgen der Verbrauchszähler G1, G2, G3, ... , G10 innerhalb der jeweiligen Gruppe 1, 2, ... , n dargestellt. Dadurch wird die Verfügbarkeit der Fernübertragung von Verbrauchsdaten der Gruppe 1, 2, ... , n über die gesamte Bereitschaftsdauer verbessert.

Die für eine Fernübertragung der Verbrauchsdaten vorgesehenen Einrichtungen umfassen dabei vorzugsweise auch die für ein Rollieren bzw. zyklisches Vertauschen der Reihenfolge der Fernübertragungen der einzelnen Verbrauchszähler G1, G2, G3, ... , G10 innerhalb einer Gruppe 1, 2, ... , n vorgesehenen Einrichtungen, so dass verbrauchszählerseitig gemeinsam mit den für eine Fernübertragung der Verbrauchsdaten vorgesehenen Einrichtungen die für das Rollieren bzw. zyklische Vertauschen der Reihenfolge der Fernübertragungen der einzelnen Verbrauchszähler G1, G2, G3, ... , G10 innerhalb einer Gruppe 1, 2, ... , n vorgesehenen Einrichtungen zwischen den Fernübertragungen in einen anhand der verbrauchszählerseitigen Zeit zur nächsten Fernübertragung wieder beendeten stromlosen oder zumindest stromsparenden Ruhezustand versetzt werden.

Vorzugsweise sind wie in Fig. 2 dargestellt innerhalb eines Zeitfensters ZF1, ZF2, ZFk einer Gruppe Pufferzeiten PZ zwischen den Übermittlungen ÜV1, ÜV2, ÜV3, ... , ÜV10 der Verbrauchsdaten während der Fernübertragungen der zu einer Gruppe 1, 2, ... , n gehörenden Verbrauchszähler G1, G2, G3, ... , G10 vorgesehen.

Zwischen unterschiedlichen Gruppen 1, 2, ... , n von Verbrauchszählern G1, G2, G3, ... , G10 zugeordneten Zeitfenstern ZF1I, ZF1II, ZF1N bzw. ZF2I, ZF2II, ZF2N bzw. ZF3I, ZF3II, ZF3N können alternativ oder zusätzlich auch z.B. datensammlerseitig Pufferzeiten vorgesehen sein.

Besonders bevorzugt ist ein nach den Zeitfenstern ZF1I, ZF1II, ZF1N bzw. ZF2I, ZF2II, ZF2N bzw. ZF3I, ZF3II, ZF3N liegendes Auffangzeitfenster vorgesehen, während dem ein Verbrauchszähler G1, G2, G3, ... , G10, dessen Fernübertragung zum Datensammler DS z.B. mangels Verbindungsaufbau während eines Zeitfensters ZF1I, ZF1II, ZF1N bzw. ZF2I, ZF2II, ZF2N bzw. ZF3I, ZF3II, ZF3N gescheitert ist, eine weitere Fernübertragung versucht, indem z.B. sein Ruhezustand nochmals beendet wird, wodurch er sich ein weiteres Mal kommunikationsaktiv schaltet und noch einmal angesprochen wird.

Kommt während des Auffangzeitfensters eine Fernübertragung zu Stande, bleibt der Verbrauchszähler G1, G2, G3, ... , G10 beispielsweise seiner Gruppe 1, 2, ... , n zugeordnet. Kommt jedoch auch während des Auffangzeitfensters über eine definierte Anzahl von Zeitfenstern ZF1I, ZF1II, ZF1N bzw. ZF2I, ZF2II, ZF2N bzw. ZF3I, ZF3II, ZF3N, d.h. Sammelzyklen, während denen Verbrauchsdaten der Verbrauchszähler G1, G2, G3, ... , G10 von dem Datensammler DS gesammelt werden, keine Fernübertragung bzw. Kommunikation zustande, wird der Verbrauchszähler G1, G2, G3, ... , G10 vorzugsweise z.B. aus seiner Gruppe 1, 2, ... , n verbannt und vom Datensammler DS nicht mehr angesprochen.

Eine gescheiterte Fernübertragung bzw. ein Kommunikationsausfall kann im Datensammler DS elektronisch hinterlegt werden.

Wichtig ist hervorzuheben, dass die Gruppengröße nach den erforderlichen Einschaltdauern der für eine Fernübertragung der Verbrauchsdaten vorgesehenen Einrichtungen der Verbrauchszähler in der Gruppe optimiert sein kann. Dadurch kann die Größe der den einzelnen Gruppen zugeordneten Zeitfenster optimiert werden, indem z.B. die Zeitfenster gleich lang sind. Dabei können sowohl die zu erwartenden und/oder z.B. nach einer bestimmten Anzahl von Fernübertragungen die Datenübertragungslänge bzw. -dauern berücksichtigt werden. Ebenfalls ist denkbar, die Drift der Zeiten der Verbrauchszähler zu bestimmen und/oder zu überwachen und diese zusätzlich oder alternativ bei der Optimierung der Gruppengröße und Gruppenzugehörigkeit zu berücksichtigen.

Grundsätzlich ist denkbar, dass beispielsweise bei einer häufigen, beispielsweise täglichen oder mehrmals täglichen Abfrage der Verbrauchsdaten durch den Datensammler eine Synchronisation der verbrauchszählerseitigen und datensammlerseitigen Zeiten nicht bei jeder Fernübertragung, sondern beispielsweise nur bei jeder zweiten, dritten, ... , zehnten, etc. Fernübertragung erfolgt. Dadurch wird eine noch ausreichende Elimination der Koppelfehler erreicht und gleichzeitig die Bereitschaftsdauer durch einen nochmals verringerten Energiebedarf weiter erhöht.

Das erfindungsgemäße Verfahren eignet sich beispielsweise, um einen Verbrauchszähler, wie beispielsweise einen batteriebetriebenen Funkwasserzähler, Funkwärmezähler oder Funk-Heizkostenverteiler mindestens einmal pro Tag mit minimalem Energieaufwand über einen stationären Datensammler auszulesen.

Ebenso wichtig ist hervorzuheben, dass die Fernübertragung der Verbrauchsdaten alternativ oder zusätzlich zu der zuvor beschriebenen Funkübertragung beispielsweise auch dadurch drahtlos bzw. ohne die Notwendigkeit einer separaten Verlegung von Kabeln zur Verbrauchsdatenfernübertragung erfolgen kann, indem z.B. Wasserleitungen, Gasleitungen, Heizungsrohre, mit denen ein Verbrauchszähler direkt oder indirekt, beispielsweise durch Anordnung an einem Heizkörper verbunden ist, wie beispielsweise in DE 10 2004 050 658 A1 beschrieben zur Fernübertragung der Verbrauchsdaten herangezogen bzw. verwendet werden.

Die Erfindung ist insbesondere im Bereich der Herstellung und der Anwendung von Verbrauchszählern, beispielsweise zur Verbrauchsabrechnung, gewerblich anwendbar.

## Patentansprüche

1. Verfahren zur Sammlung von Verbrauchsdaten, bei welchem Verfahren:
- durch mindestens einen Verbrauchszähler (G1, G2, G3, ... , G10) erfasste Verbrauchsdaten während Fernübertragungen in Zeitfenstern (ZF; ZF1, ZF2, ZFk; ZF1I, ZF1II, ZF1N; ZF2I, ZF2II, ZF2N; ZF3I, ZF3II, ZF3N), deren Lagen in einer datensammlerseitigen Zeit festgelegt sind, zu deren Sammlung drahtlos an einen Datensammler (DS) übermittelt werden,
- der Verbrauchszähler (G1, G2, G3, ... , G10) die Lagen der Zeitfenster (ZF; ZF1, ZF2, ZFk; ZF1I, ZF1II, ZF1N; ZF2I, ZF2II, ZF2N; ZF3I, ZF3II, ZF3N) in einer verbrauchszählerseitigen Zeit selbständig überwacht, und
- die verbrauchszählerseitig zumindest für die Fernübertragung der Verbrauchsdaten vorgesehenen und von einem Energiespeicher mit Strom versorgten Einrichtungen zwischen den Fernübertragungen in einen anhand der verbrauchszählerseitigen Zeit zur nächsten Fernübertragung wieder beendeten stromlosen oder zumindest stromsparenden Ruhezustand versetzt werden,
**dadurch gekennzeichnet,**
**dass** bei jeder Fernübertragung die datensammlerseitigen und verbrauchszählerseitigen Zeiten synchronisiert werden.

2. Verfahren nach Anspruch 1,
**dadurch gekennzeichnet,**
**dass** der Datensammler (DS) dem Verbrauchszähler (G1, G2, G3, ... , G10) eine erfolgreiche Übermittlung (ÜV1, ÜV2, ÜV3, ..., ÜV10) der Verbrauchsdaten am Ende einer Fernübertragung bestätigt.

3. Verfahren nach Anspruch 2,
**dadurch gekennzeichnet,**
**dass** die für eine Fernübertragung der Verbrauchsdaten vorgesehenen Einrichtungen unmittelbar nach einer Bestätigung einer erfolgreichen Übermittlung (ÜV1, ÜV2, ÜV3, ... , ÜV10) der Verbrauchsdaten an den Datensammler (DS) in den Ruhezustand fallen.

4. Verfahren nach einem der vorhergehenden Ansprüche,
**dadurch gekennzeichnet,**
**dass** der Datensammler (DS) den Verbrauchszähler (G1, G2, G3, ... , G10) zu Beginn einer Fernübertragung anspricht und der Verbrauchszähler (G1, G2, G3, ... , G10) erst nach erfolgter Ansprache die Verbrauchsdaten an den Datensammler (DS) übermittelt.

5. Verfahren nach einem der vorhergehenden Ansprüche,
**dadurch gekennzeichnet,**
**dass** mehrere Verbrauchszähler (G1, G2, G3, ... , G10) zu einer Gruppe (1, 2, ... , n) zusammengefasst sind, wobei den Verbrauchszählern (G1, G2, G3, ... , G10) einer Gruppe (1, 2, ..., n) ein gemeinsames Zeitfenster (ZF; ZF1, ZF2, ZFk; ZF1I, ZF1II, ZF1N; ZF2I, ZF2II, ZF2N; ZF3I, ZF3II, ZF3N) zugeordnet ist.

6. Verfahren nach Anspruch 5,
**gekennzeichnet durch**
ein zyklisches Vertauschen der Reihenfolge der Fernübertragungen der einzelnen Verbrauchszähler (G1, G2, G3, ... , G10) innerhalb einer Gruppe (1, 2, ... , n).

7. Verfahren nach Anspruch 5 oder 6,
**dadurch gekennzeichnet,**
**dass** innerhalb eines Zeitfensters (ZF; ZF1, ZF2, ZFk; ZF1I, ZF1II, ZF1N; ZF2I, ZF2II, ZF2N; ZF3I, ZF3II, ZF3N) einer Gruppe (1, 2, ... , n) Pufferzeiten (PZ) zwischen Übermittlungen (ÜV1, ÜV2, ÜV3, ... , ÜV10) der Verbrauchsdaten während der Fernübertragungen der zu der Gruppe (1, 2, ... , n). gehörenden Verbrauchszähler G1, G2, G3, ... , G10) vorgesehen sind.

8. Verfahren nach Anspruch 5, 6 oder 7,
**dadurch gekennzeichnet,**
**dass** die Verbrauchsdaten mehrerer Gruppen von Verbrauchszählern (G1, G2, G3, ... , G10) durch den Datensammler (DS) gesammelt werden, wobei den Gruppen (1, 2, ... , n) aufeinander folgende Zeitfenster (ZF; ZF1, ZF2, ZFk; ZF1I, ZF1II, ZF1N; ZF2I, ZF2II, ZF2N; ZF3I, ZF3II, ZF3N) zugeordnet sind.

9. Verfahren nach Anspruch 8,
**dadurch gekennzeichnet,**
**dass** zwischen unterschiedlichen Gruppen (1, 2, ... , n) von Verbrauchszählern (G1, G2, G3, ... , G10) zugeordneten Zeitfenstern (ZF; ZF1, ZF2, ZFk; ZF1I, ZF1II, ZF1N; ZF2I, ZF2II, ZF2N; ZF3I, ZF3II, ZF3N) zumindest datensammlerseitig Pufferzeiten vorgesehen sind.

10. Verfahren nach einem der vorhergehenden Ansprüche,
**dadurch gekennzeichnet,**
**dass** verbrauchszählerseitig eine Zwischenspeicherung von zwischen zwei Fernübertragungen gemessener Verbrauchsdaten erfolgt, wobei insbesondere eine Aufsummierung der aufgelaufenen Monatswerte erfolgt.

11. Verfahren nach einem der vorhergehenden Ansprüche,
**dadurch gekennzeichnet,**
**dass** ein dem Zeitfenster (ZF; ZF1, ZF2, ZFk; ZF1I, ZF1II, ZF1N; ZF2I, ZF2II, ZF2N; ZF3I, ZF3II, ZF3N) nachgeordnetes Auffangzeitfenster vorgesehen ist, während dem ein Verbrauchszähler (G1, G2, G3, ... , G10), dessen Fernübertragung zum Datensammler (DS) während des Zeitfensters (ZF; ZF1, ZF2, ZFk; ZF1I, ZF1II, ZF1N; ZF2I, ZF2II, ZF2N; ZF3I, ZF3II, ZF3N) gescheitert ist, eine weitere Fernübertragung versucht.

12. Verfahren nach einem der vorhergehenden Ansprüche,
**dadurch gekennzeichnet,**
**dass** eine gescheiterte Fernübertragung im Datensammler (DS) hinterlegt wird.

13. Verfahren nach einem der vorhergehenden Ansprüche,
**dadurch gekennzeichnet,**
**dass** ein Nutzer auf den Datensammler (DS) zugreifen kann, um seine Verbrauchsdaten auszulesen.

14. Verfahren nach Anspruch 13,
**dadurch gekennzeichnet,**
**dass** anhand der vom Datensammler (DS) gesammelten Verbrauchsdaten mindestens eines einem Nutzer zugeordneten Verbrauchszählers (G1, G2, G3, ... , G10) ein Verbrauchsprofil des Nutzers erstellt wird.

15. Verfahren nach einem der vorhergehenden Ansprüche,
**dadurch gekennzeichnet,**
**dass** bei einer gescheiterten Synchronisation der datensammlerseitigen und verbrauchszählerseitigen Zeiten der Verbrauchszähler (G1, G2, G3, ... , G10) seine Zeit auf Basis ermittelter Werte kalibriert.

## Claims

1. A method for collecting consumption data, in which:
- consumption data acquired by at least one consumption meter (G1, G2, G3, ... , G10) is collected by being wirelessly transmitted to a data collector (DS) during remote transmissions in time windows (ZF; ZF1, ZF2, ZFk; ZF1I, ZF1II, ZF1N; ZF2I, ZF2II, ZF2N; ZF3I, ZF3II, ZF3N), the positions of which are defined in a data collector time,
- the consumption meter (G1, G2, G3, ... , G10) independently monitors the positions of the time windows (ZF; ZF1, ZF2, ZFk; ZF1I, ZF1II, ZF1N; ZF2I, ZF2II, ZF2N; ZF3I, ZF3II, ZF3N) in a consumption meter time, and
- at least the consumption meter devices that are provided for the remote transmission of consumption data and supplied with power by an energy storage device are between the remote transmissions transferred into a currentless or at least current-saving idle state that is once again terminated by means of the consumption meter time for the next remote transmission,
**characterized in**
**that** the data collector and the consumption meter times are synchronized during each remote transmission.

2. The method according to Claim 1,
**characterized in**
**that** the consumption meter (G1, G2, G3, ... , G10) receives confirmation of a successful transmission (ÜV1, ÜV2, ÜV3, ... , ÜV10) of the consumption data from the data collector (DS) at the end of a remote transmission.

3. The method according to Claim 2,
**characterized in**
**that** the devices provided for a remote transmission of the consumption data transfer into the idle state immediately after a confirmation of a successful transmission (ÜV1, ÜV2, ÜV3, ... , ÜV10) of the consumption data to the data collector (DS).

4. The method according to one of the preceding claims,
**characterized in**
**that** the data collector (DS) addresses the consumption meter (G1, G2, G3, ... , G10) at the beginning of a remote transmission and the consumption meter (G1, G2, G3, ... , G10) only transmits the consumption data to the data collector (DS) after it has been addressed.

5. The method according to one of the preceding claims,
**characterized in**
**that** several consumption meters (G1, G2, G3, ... , G10) are combined into a group (1, 2, ... , n), wherein a common time window (ZF; ZF1, ZF2, ZFk; ZF1I, ZF1II, ZF1N; ZF2I, ZF2II, ZF2N; ZF3I, ZF3II, ZF3N) is assigned to the consumption meters (G1, G2, G3, ... , G10) of a group (1, 2, ... , n).

6. The method according to Claim 5,
**characterized by**
a cyclic interchange of the sequence of the remote transmissions of the individual consumption meters (G1, G2, G3, ... , G10) within a group (1, 2, ... , n).

7. The method according to Claim 5 or 6,
**characterized in**
**that** buffer times (PZ) between transmissions (ÜV1, ÜV2, ÜV3, ... , ÜV10) of the consumption data are provided within a time window (ZF; ZF1, ZF2, ZFk; ZF1I, ZF1II, ZF1N; ZF2I, ZF21I, ZF2N; ZF3I, ZF3II, ZF3N) of a group (1, 2, ... , n) during the remote transmissions of the consumption meters (G1, G2, G3, ... , G10) belonging to the group (1, 2, ... , n).

8. The method according to Claim 5, 6 or 7,
**characterized in**
**that** the consumption data of several groups of consumption meters (G1, G2, G3, ... , G10) is collected by the data collector (DS), wherein successive time windows (ZF; ZF1, ZF2, ZFk; ZF1I, ZF1II, ZF1N; ZF2I, ZF2II, ZF2N; ZF3I, ZF3II, ZF3N) are assigned to the groups (1, 2, ... , n).

9. The method according to Claim 8,
**characterized in**
**that** at least data collector buffer times are provided between time windows (ZF; ZF1, ZF2, ZFk; ZF1I, ZF1II, ZF1N; ZF2I, ZF2II, ZF2N; ZF3I, ZF3II, ZF3N) assigned to different groups (1, 2, ... , n) of consumption meters (G1, G2, G3, ... , G10).

10. The method according to one of the preceding claims,
**characterized in**
**that** an intermediate storage of consumption data measured between two remote transmissions takes place in the consumption meter, wherein particularly a summation of the accumulated monthly values takes place.

11. The method according to one of the preceding claims,
**characterized in**
**that** a collection time window is provided subsequent to a time window (ZF; ZF1, ZF2, ZFk; ZF1I, ZF1II, ZF1N; ZF2I, ZF2II, ZF2N; ZF3I, ZF3II, ZF3N), wherein a consumption meter (G1, G2, G3, ... , G10), the remote transmission of which to the data collector (DS) failed during the time window (ZF; ZF1, ZF2, ZFk; ZF1I, ZF1II, ZF1N; ZF2I, ZF2II, ZF2N; ZF3I, ZF3II, ZF3N), attempts another remote transmission during this collection time window.

12. The method according to one of the preceding claims,
**characterized in**
**that** a failed remote transmission is stored in the data collector (DS).

13. The method according to one of the preceding claims,
**characterized in**
**that** a user can access the data collector (DS) in order to read out his/her consumption data.

14. The method according to Claim 13,
**characterized in**
**that** a consumption profile of a user is prepared based on the consumption data of at least one consumption meter (G1, G2, G3, ... , G10) assigned to the user which was collected by the data collector (DS).

15. The method according to one of the preceding claims,
**characterized in**
**that** the consumption meter (G1, G2, G3, ... , G10) calibrates its time based on determined values in case of a failed synchronization of the data collector and the consumption meter times.

## Revendications

1. Procédé de collecte de données de consommation, dans lequel procédé:
- les données de consommation détectées par au moins un compteur de consommation (G1, G2, G3, ... , G10) pendant des transmissions à distance sont transmises dans des fenêtres temporelles (ZF; ZF1, ZF2, ZFk; ZF1I, ZF1II, ZF1N; ZF2I, ZF2II, ZF2N; ZF3I, ZF3II, ZF3N), dont les positions dans un temps du côté du collecteur de données sont déterminées, en vue de leur collecte sans fil sur un collecteur de données (DS),
- le compteur de consommation (G1, G2, G3, ... , G10) supervise les positions des fenêtres temporelles (ZF; ZF1, ZF2, ZFk; ZF1I, ZF1II, ZF1N; ZF2I, ZF2II, ZF2N; ZF3I, ZF3II, ZF3N) de manière autonome dans un temps du côté du compteur de consommation, et
- les dispositifs prévus du côté du compteur de consommation au moins pour la transmission à distance des données de consommation et alimentés en électricité par un accumulateur d'énergie entre les transmissions à distance sont placés dans un état de repos sans courant terminé de nouveau sur la base du temps du côté du compteur de consommation jusqu'à la transmission à distance suivante ou au moins économiseur d'énergie,
**caractérisé en**
**ce que** à chaque transmission à distance les temps du côté du collecteur de données et du côté du compteur de consommation sont synchronisés.

2. Procédé selon la revendication 1,
**caractérisé en**
**ce que** le collecteur de données (DS) confirme au compteur de consommation (G1, G2, G3, .. , G10) une transmission réussie (UV1, UV2, UV3, ... , UV10) des données de consommation à la fin d'une transmission à distance.

3. Procédé selon la revendication 2,
**caractérisé en**
**ce que** les dispositifs prévus pour une transmission à distance des données de consommation tombent en l'état de repos directement après une confirmation d'une transmission réussie (UV1, UV2, UV3, ... , UV10) des données de consommation au collecteur de données (DS).

4. Procédé selon une des revendications précédentes,
**caractérisé en**
**ce que** le collecteur de données (DS) répond au compteur de consommation (G1, G2, G3, ... , G10) au début d'une transmission à distance et le compteur de consommation (G1, G2, G3, ... , G10) transmet seulement après une réponse réussie les données de consommation au collecteur de données (DS).

5. Procédé selon une des revendications précédentes,
**caractérisé en**
**ce que** plusieurs compteurs de consommation (G1, G2, G3, ... , G10) sont regroupés en un groupe (1, 2, ... , n), dans lequel les données de consommation (G1, G2, G3, ... , G10) d'un groupe (1, 2, ... , n) sont affectées à une fenêtre temporelle commune (ZF; ZF1, ZF2, ZFk; ZF1I, ZF1II, ZF1N; ZF2I, ZF2II, ZF2N; ZF3I, ZF3II, ZF3N).

6. Procédé selon la revendication 5,
**caractérisé par**
une inversion cyclique de la séquence de transmissions à distance des compteurs de consommation individuels (G1, G2, G3, ... , G10) à l'intérieur d'un groupe (1, 2, ... , n).

7. Procédé selon la revendication 5 ou 6,
**caractérisé en**
**ce que** à l'intérieur d'une fenêtre temporelle (ZF; ZF1, ZF2, ZFk; ZF1I, ZF1II, ZF1N; ZF2I, ZF2II, ZF2N; ZF3I, ZF3II, ZF3N) d'un groupe (1, 2, ... , n), des périodes tampons (PZ) entre les transmissions (UV1, UV2, UV3, ... , UV10) des données de consommation sont prévus pendant les transmissions à distance des compteurs de consommation (G1, G2, G3, ... , G10) appartenant au groupe (1, 2, ... , n).

8. Procédé selon les revendications 5,6 ou 7,
**caractérisé en**
**ce que** les données de consommation de plusieurs groupes de compteurs de consommation (G1, G2, G3, ... , G10) sont collectées par le collecteur de données (DS), dans lequel les groupes (1, 2, ... , n) sont affectés à des fenêtres temporelles se succédant (ZF; ZF1, ZF2, ZFk; ZF1I, ZF1II, ZF1N; ZF2I, ZF2II, ZF2N; ZF3I, ZF3II, ZF3N).

9. Procédé selon la revendication 8,
caractérisé en
ce entre différents groupes (1, 2, ... , n) de fenêtres temporelles (ZF; ZF1, ZF2, ZFk; ZF1I, ZF1II, ZF1N; ZF2I, ZF2II, ZF2N; ZF3I, ZF3II, ZF3N) affectées aux compteurs de consommation (G1, G2, G3, ... , G10), des périodes tampons au moins du côté du collecteur de données sont prévues.

10. Procédé selon une des revendications précédentes,
**caractérisé en**
**ce que** du côté du compteur de consommation, un stockage intermédiaire de données de consommation mesurées entre deux transmissions à distance a lieu, dans lequel notamment une addition des valeurs mensuelles cumulées a lieu.

11. Procédé selon une des revendications précédentes,
**caractérisé en**
**ce que** un fenêtre temporelle de prise en charge disposée en aval de la fenêtre temporelle que des fenêtres temporelles (ZF; ZF1, ZF2, ZFk; ZF1I, ZF1II, ZF1N; ZF2I, ZF2II, ZF2N; ZF3I, ZF3II, ZF3N) est prévue, pendant laquelle un compteur de consommation (G1, G2, G3, ... , G10), dont la transmission a lieu vers le collecteur de données (DS) a échoué pendant la fenêtre temporelle que des fenêtres temporelles (ZF; ZF1, ZF2, ZFk; ZF1I, ZF1II, ZF1N; ZF2I, ZF2II, ZF2N; ZF3I, ZF3II, ZF3N), essaie une autre transmission à distance.

12. Procédé selon une des revendications précédentes,
**caractérisé en**
**ce que** une transmission à distance ayant échoué est déposée dans le collecteur de données (DS).

13. Procédé selon une des revendications précédentes,
**caractérisé en**
**ce que** un utilisateur peut accéder au collecteur de données (DS), pour y lire ses données de consommation.

14. Procédé selon la revendication 13,
**caractérisé en**
**ce que** sur la base des données de consommation collectées par le collecteur de données (DS) d'au moins un compteur de consommation (G1, G2, G3, ... , G10) affecté à un utilisateur, un profil de consommation de l'utilisateur est établi.

15. Procédé selon une des revendications précédentes, **caractérisé en ce que** lors d'un échec de synchronisation des temps du côté du collecteur de données et du côté du compteur de consommation, le compteur de consommation (G1, G2, G3, ... , G10) calibre son temps sur la base des valeurs déterminées.
